# EUROPEAN PATENT APPLICATION

(11) **EP 4 583 179 A1**
(43) Date of publication of application: **09.07.2025**
(21) Application number: 22957447.0
(22) Date of filing: 01.09.2022
(51) Int. Cl.: H01M 4/13, H01M 4/58, H01M 4/587, H01M 4/62, H01M 10/052, H01M 10/0567

(54) **NEGATIVE ELECTRODE FOR LITHIUM ION SECONDARY BATTERIES, AND LITHIUM ION SECONDARY BATTERY**

(71) Applicant: Vehicle Energy Japan Inc., Ibaraki 312-8505 (JP)
(72) Inventor: TOOYAMA, Tatsuya, Hitachinaka-shi, Ibaraki 312-8505 (JP)
(74) Representative: Strehl & Partner mbB
(86) International application number: PCT/JP2022/033038
(87) International publication number: WO 2024/047853

(57) **Abstract**

An object of the present invention is to provide a negative electrode for a lithium ion secondary battery capable of achieving an improvement in a charging performance and long life of the battery. The negative electrode for a lithium ion secondary battery of the present invention includes a negative electrode current collector, a negative electrode active material layer laminated on the negative electrode current collector, in which the negative electrode active material layer includes a negative electrode first active material layer laminated on the negative electrode current collector and a negative electrode second active material layer laminated on the negative electrode first active material layer, in which the negative electrode first active material layer includes a negative electrode first active material, and the negative electrode second active material layer includes a negative electrode second active material, and in which a BET specific surface area of the negative electrode second active material is larger than the BET specific surface area of the negative electrode first active material.

## Description

### Technical Field

The present invention relates to a negative electrode for lithium ion secondary batteries, and a lithium ion secondary battery including the negative electrode.

### Background Art

Conventionally, a lithium ion secondary battery having a negative electrode including a plurality of active material layers has been known (see, for example, Patent Literatures 1 to 6).

### Citation List

### Patent Literature

[Patent Literature 1] International Publication WO 2011/114433
[Patent Literature 2] Japanese Patent Application Laid-Open No. 2009-009858
[Patent Literature 3] Japanese Patent Application Laid-Open No. 2013-246900
[Patent Literature 4] Japanese Patent Application Laid-Open No. 2014-229581
[Patent Literature 5] Japanese Patent Application Laid-Open No. 2015-187926
[Patent Literature 6] Japanese Patent Application Laid-Open No. 2019-185920

### Summary of Invention

### Technical Problem

There is a demand for development of a negative electrode for a lithium ion secondary battery that realizes an improvement in a charging performance of the lithium ion secondary battery and an improvement in a durability of the lithium ion secondary battery.

### Solution to Problem

A negative electrode for a lithium ion secondary battery of the present invention includes: a negative electrode current collector; and a negative electrode active material layer laminated on the negative electrode current collector, in which the negative electrode active material layer includes a negative electrode first active material layer laminated on the negative electrode current collector, and a negative electrode second active material layer laminated on the negative electrode first active material layer, the negative electrode first active material layer includes a negative electrode first active material, the negative electrode second active material layer includes a negative electrode second active material, and a BET specific surface area of the negative electrode second active material is larger than the BET specific surface area of the negative electrode first active material.

A negative electrode for a lithium ion secondary battery of the present invention includes: a negative electrode current collector; and a negative electrode active material layer laminated on the negative electrode current collector, in which the negative electrode active material layer includes a negative electrode first active material layer laminated on the negative electrode current collector, and a negative electrode second active material layer laminated on the negative electrode first active material layer, the negative electrode first active material layer includes a negative electrode first active material, the negative electrode second active material layer includes a negative electrode second active material, and at least one of the following conditions are satisfied: a first condition that a density of the negative electrode second active material layer is lower than the density of the negative electrode first active material layer, and a second condition that the negative electrode first active material layer and the negative electrode second active material layer includes a conductive auxiliary agent, a ratio of a weight of the conductive auxiliary agent to the total weight of the negative electrode second active material layer is larger than the ratio of the weight of the conductive auxiliary agent to the total weight of the negative electrode first active material layer, and in which the negative electrode first active material contains an Si-based material. The Si-based material contained in the negative electrode first active material may be pre-doped with lithium.

The lithium ion secondary battery of the present invention is a lithium ion secondary battery including a positive electrode, a negative electrode, and an electrolyte, in which the negative electrode is a negative electrode for a lithium ion secondary battery of the present invention.

### Advantageous Effects of Invention

According to the lithium ion secondary battery provided with the negative electrode for the lithium ion secondary battery of the present invention, it is possible to realize improvement in a charging performance and long life.

### Brief Description of Drawings

Figure 1 is a schematic perspective view showing a battery 1 including a negative electrode 120 of an example according to first and second embodiments.
Figure 2 is a schematic perspective view showing a charge/discharge body 100 of the battery 1 shown in Figure 1.
Figure 3 is a schematic perspective view showing a portion including a positive electrode tab 111b and a negative electrode tab 121b in the charge/discharge body 100 shown in Figure 2, with side ends of a positive electrode 110, a negative electrode 120 and a separators 130 at different positions.
Figure 4 is a schematic side view showing a charge/discharge body 100 of a battery 1 of an example according to a first embodiment, the charge/discharge body 100 shown in Figure 3.
Figure 5 is a schematic enlarged view of a portion of a die head and a back roller used in a production of the negative electrode.
Figure 6 is a schematic cross-sectional view of a positive electrode and negative electrode of a separatorless battery including the negative electrode of another example according to the first and second embodiments.
Figure 7 is a schematic enlarged cross-sectional view of an interface and the vicinity thereof between a negative electrode second active material layer and a negative electrode electronic insulation layer of a negative electrode active material layer of another example of the negative electrode according to the first and second embodiments.
Figure 8 is a schematic side view of a charge/discharge body 100 of battery 1 of an example according to the second embodiment, the charge/discharge body 100 shown in Figure 3.

### Description of Embodiments

Each embodiment of the present invention will be described with reference to the drawings. To facilitate understanding of each embodiment, the size and ratio of components may be exaggerated in each drawing. In the drawings, the same reference numerals are given to the same components. In the drawings, a lateral width direction X (X-axis direction), a depth direction Y (Y-axis direction), and a height direction Z (Z-axis direction) of the constituent members of the battery 1 and the battery 1 are indicated by arrows. In each of the drawings, the lateral width direction X, the depth direction Y, and the height direction Z indicate relative direction relationships. That is, for example, in a case where the battery 1 is rotated by 180 degrees and the upper surface and the lower surface are reversely rotated, or in a case where the battery 1 is rotated by 90 degrees and the upper surface is arranged as a side surface, the lateral width direction X, the depth direction Y, and the height direction Z of the battery 1 change.

Hereinafter, the "negative electrode for a lithium ion secondary battery" may be abbreviated as "negative electrode". The term "lithium ion secondary battery" is sometimes abbreviated as "battery".

### [First Embodiment]

A negative electrode for a lithium ion secondary battery according to a first embodiment includes a negative electrode current collector, a negative electrode active material layer laminated on the negative electrode current collector, in which the negative electrode active material layer includes a negative electrode first active material layer laminated on the negative electrode current collector and a negative electrode second active material layer laminated on the negative electrode first active material layer, the negative electrode first active material layer includes a negative electrode first active material, the negative electrode second active material layer includes a negative electrode second active material, and a BET specific surface area of the negative electrode second active material is larger than the BET specific surface area of the negative electrode first active material. And the lithium ion secondary battery according to the first embodiment is a lithium ion secondary battery includes a positive electrode, a negative electrode, and an electrolyte, and the negative electrode is the negative electrode for the lithium ion secondary battery according to the first embodiment.

### (Configuration of Battery Including Negative Electrode of Example According to First Embodiment)

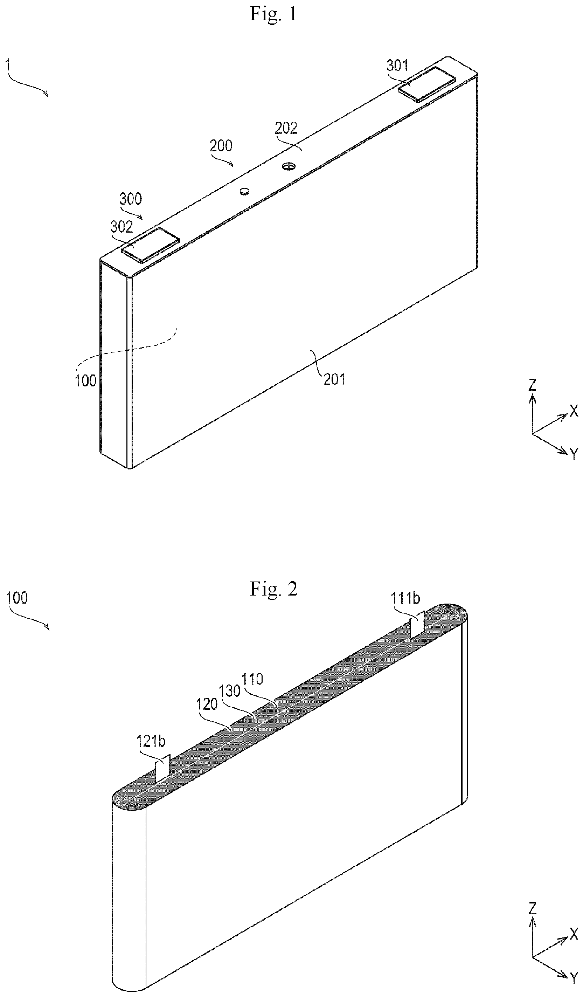

A configuration of a battery including negative electrode of an example according to the first embodiment will be described with reference to Figure 1 to Figure 4.

The battery 1 including the negative electrode 120 of an example according to the first embodiment is a lithium ion secondary battery, and includes a charge/discharge body 100 in which electric power is charged and discharged, a container 200 which contains the charge/discharge body 100, and an external terminal 300 connected to the charge/discharge body 100 and attached to the container 200, as shown in Figure 1.

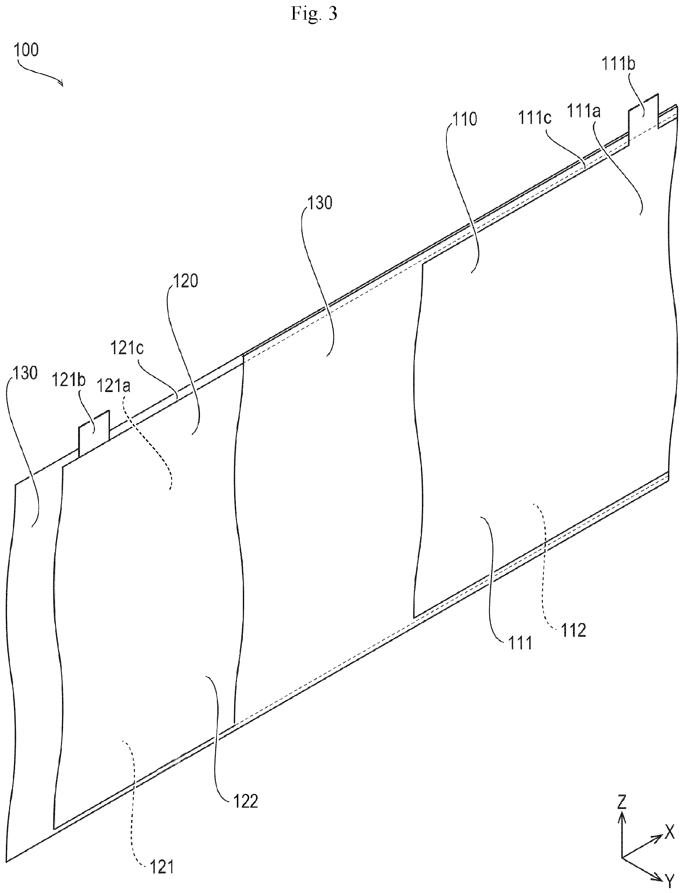

As illustrated in Figures 2 to 4, the charge/discharge body 100 includes a positive electrode 110, a negative electrode 120, and a separator 130. The charge/discharge body 100 impregnates the separator 130 with an electrolyte solution in which a support salt (electrolyte) is dissolved in a state of being contained in the container 200. As shown in Figures 2 and 3, the charge/discharge body 100 is configured by winding a positive electrode 110 formed in an elongated shape and a negative electrode 120 formed in an elongated shape through a separator 130 formed in an elongated shape. The charge/discharge body 100 is formed in a rectangular parallelepiped shape in which both end portions are rounded in a state in which the constituent members are wound.

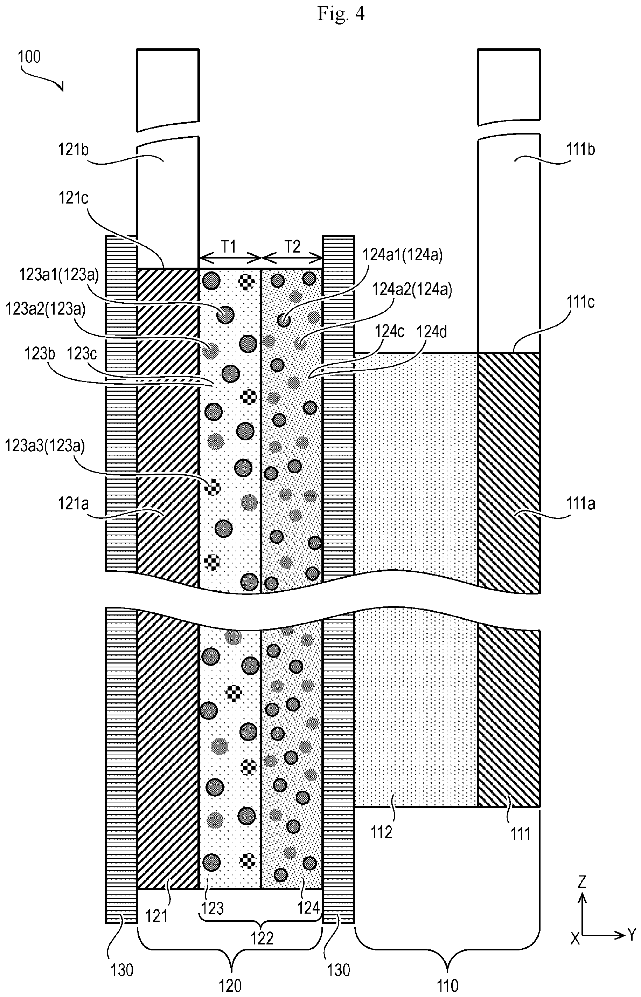

The positive electrode 110 is a positive electrode for a lithium ion secondary battery, and includes a positive electrode current collector 111 and a positive electrode active material layer 112 laminated on the positive electrode current collector 111, as shown in Figures 3 and 4.

The positive electrode current collector 111 is formed in an elongated shape extending in the lateral width direction X. As illustrated in Figures 3 and 4, the positive electrode current collector 111 includes a current collector 111a and a positive electrode tab 111b. The current collector 111a is long in the lateral width direction X and is formed in a foil shape. As shown in Figures 3 and 4, the positive electrode tab 111b protrudes from a side edge 111c along a longer direction of the current collector 111a to a shorter direction (above the height direction Z) of the current collector 111a. The positive electrode tab 111b is formed integrally with the current collector 111a. For example, one positive electrode tab 111b is formed on the current collector 111a. The current collector 111a is formed of, for example, aluminum or an aluminum alloy, for example, an aluminum foil having a plate-like (sheet-like) shape.

As shown in Figure 4, the positive electrode active material layer 112 is bonded to the current collector 111a of the positive electrode current collector 111. The positive electrode active material layer 112 may be formed on both surfaces of the current collector 111a. For example, the positive electrode active material layer 112 faces all regions along the shorter direction (height direction Z) of the current collector 111a.

The positive electrode active material layer 112 includes a positive electrode active material composed of a lithium-containing composite oxide. Examples of the lithium-containing composite oxide include metallic elements such as nickel (Nickel), cobalt (Cobalt), and manganese (Manganese), and lithium (Lithium).

Examples of the lithium-containing composite oxide constituting the positive electrode active material may be a ternary lithium-containing composite oxide represented by the following general composition formula:

Li_{1+X}M^{A}O₂ (1)

(wherein X satisfies -0.15 ≤ X ≤ 0.15, and M^{A} represents an element group containing at least one element selected from the group consisting of Mn and Al, Ni, and Co.)

The ternary lithium-containing composite oxide represented by the above general composition formula (1) has a high thermal stability and a stability in a high potential state, and the safety of the battery 1 and various battery characteristics can be enhanced by applying the oxide.

The positive electrode active material layer 112 further includes, for example, an additive such as a conductive aid or a binder in addition to the positive electrode active material.

As the conductive auxiliary agent of the positive electrode active material layer 112, a carbon-based material can be used. As the carbon-based material, a crystalline carbon, an amorphous carbon, or a mixture thereof can be used. Examples of the crystalline carbon include a natural graphite (e.g., a scaly graphite), an artificial graphite (a man-made graphite), carbon fibers, or mixtures thereof. Examples of the amorphous carbon include carbon black (e.g., acetylene black, Ketjen black, channel black, furnace black, lamp black, thermal black, or mixtures thereof). Examples of carbon fibers include carbon nanotubes.

As the binder of the positive electrode active material layer 112, for example, polyvinylidene fluoride (PVdF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethyl cellulose, various latexes, acrylic resins, or mixtures thereof can be used.

The positive electrode 110 can be manufactured, for example, as follows. First, materials (for example, a positive electrode active material, a conductive auxiliary agent, a binder, or the like) included in the positive electrode active material layer 112 is prepared. The materials may be in powder form. These materials are then mixed and the resulting mixture is dispersed in a solvent (e.g., N-methyl-2-pyrrolidone (NMP) and/or water) to prepare a positive electrode slurry. Next, the positive electrode slurry is applied to the surface (one side or both sides) of the positive electrode current collector 111 by a known technique, dried, and subjected to calendering treatment as necessary to form the positive electrode active material layer 112. Thus, the positive electrode 110 is obtained.

The negative electrode 120 is a negative electrode for a lithium ion secondary battery, and includes a negative electrode current collector 121 and a negative electrode active material layer 122 laminated on the negative electrode current collector 121, as shown in Figures 3 and 4. The negative electrode active material layer 122 includes a negative electrode first active material layer 123 laminated on the negative electrode current collector 121 and a negative electrode second active material layer 124 laminated on the negative electrode first active material layer 123. That is, the negative electrode 120 includes a plurality of active material layers.

The negative electrode current collector 121 is formed in an elongated shape extending in the lateral width direction X. As illustrated in Figures 3 and 4, the negative electrode current collector 121 includes a current collector 121a and a negative electrode tab 121b. The current collector 121a is long in the lateral width direction X and is formed in a foil shape. As shown in Figure 4, the current collector 121a of the negative electrode 120 has a longer width along the shorter direction (height direction Z) than the current collector 111a of the positive electrode 110. Both ends (from the upper end to the lower end in the height direction Z) of the negative electrode 120 along the shorter direction of the current collector 121a are positioned along the shorter direction of the current collector 111a of the positive electrode 110 via the separators 130. As shown in Figures 3 and 4, the negative electrode tab 121b protrudes from a side edge 121c along the longer direction of the current collector 121a to the shorter direction (above the height direction Z) of the current collector 121a. The negative electrode tab 121b protrudes in the same direction (upward in the height direction Z) as the positive electrode tab 111b of the positive electrode 110 while being laminated with the positive electrode 110 via the separators 130. The negative electrode tab 121b is spaced apart from the positive electrode tab 111b of the positive electrode 110 in the lateral width direction X while being laminated with the positive electrode 110 via the separators 130. The negative electrode tab 121b is formed integrally with the current collector 121a. For example, one negative electrode tab 121b is formed on the current collector 121a. The current collector 121a is formed of, for example, copper or a copper alloy.

As shown in Figure 4, the negative electrode first active material layer 123 of the negative electrode active material layer 122 is bonded to the current collector 121a of the negative electrode current collector 121. The negative electrode first active material layer 123 may be formed on both surfaces of the current collector 121a. The negative electrode first active material layer 123 faces, for example, the entire area along the shorter direction (height direction Z) of the current collector 121a. The negative electrode second active material layer 124 of the negative electrode active material layer 122 is bonded to the negative electrode first active material layer 123.

The negative electrode first active material layer 123 includes a negative electrode first active material 123a. The negative electrode first active material 123a contains a pitch-coated natural graphite 123a1, a natural graphite 123a2 exposed without being coated on the surface, and an artificial graphite 123a3 (a man-made graphite). The negative electrode first active material layer 123 further includes additives such as a conductive auxiliary agent 123c and a binder 123b in addition to the negative electrode first active material 123a. The negative electrode first active material layer 123 is a high-capacity layer capable of storing relatively large amounts of lithium ions, and generally corresponds to a negative electrode active material layer used in an electric vehicle (BEV: Battery Electric Vehicle).

As shown in Figure 4, the negative electrode second active material layer 124 include a negative electrode second active material 124a. The negative electrode second active material 124a includes a pitch-coated natural graphite 124a1 and a natural graphite 124a2 exposed without being coated on the surface. The negative electrode second active material layer 124 further includes additives such as a conductive auxiliary agent 124c and a binder 124b in addition to the negative electrode second active material 124a. The negative electrode second active material layer 124 generally corresponds to a negative electrode active material layer used in a hybrid vehicle (HEV: Hybrid Electric Vehicle).

In the negative electrode active material layer 122, an average particle diameter of the negative electrode second active material 124a of the negative electrode second active material layer 124 is smaller than the average particle diameter of the negative electrode first active material 123a of the negative electrode first active material layer 123. Accordingly, the BET specific surface area of the negative electrode second active material 124a of the negative electrode second active material layer 124 is larger than the BET specific surface area of the negative electrode first active material 123a of the negative electrode first active material layer 123.

As shown in Figures 3 and 4, the separator 130 has an insulating function of insulating between the positive electrode 110 and the negative electrode 120 and preventing a short circuit between the positive electrode 110 and the negative electrode 120, and a function of holding a nonaqueous electrolyte. The separator 130 allows lithium ions to pass through the electrolyte solution. The separator 130 is formed in an elongated shape. As shown in Figure 4, the separators 130 are longer in width along the shorter direction (height direction Z) than the current collector 111a of the positive electrode 110 and the current collector 121a of the negative electrode 120. Both ends (from upper end to lower end in the height direction Z) of the positive electrode 110 along the shorter direction of the current collector 111a are located within a range (from upper end to lower end in the height direction Z) along the shorter direction of the separators 130, and both ends (from upper end to lower end in the height direction Z) along the shorter direction of the current collector 121a of the negative electrode 120 are located. The separator 130 is made of a porous material. As the separator 130, a porous sheet made of a resin such as polyethylene (PE: PolyEthylene), polypropylene (PP: PolyPropylene), polyester, cellulose, or polyamide, or a laminated sheet thereof (for example, a sheet having a three-layer structure of PP/PE/PP) is used.

One or both surfaces of the separator 130 may be provided with a layer including an inorganic material (e.g., alumina particles etc.) and a binder. Thus, even when the battery 1 is used in an abnormal state (for example, when the temperature of the lithium ion secondary battery rises to 160 °C or higher due to overcharge, crushing, etc.), the separator 130 is prevented from melting and the insulating function can be maintained. Therefore, the safety of the battery 1 is improved.

The electrolytic solution is impregnated into the separator 130 and is in contact with the positive electrode 110 and the negative electrode 120. The electrolyte solution includes an organic solvent and a support salt (electrolyte), and may further include an additive such as an SEI film-forming agent. As the organic solvent, for example, a carbonate ester or the like is used. As the support salt, for example, a lithium salt is used.

As shown in Figure 1, the container 200 contains a charge/discharge body 100. The container 200 includes a case 201 and a lid 202. The lid 202 is joined to the opening of the case 201, and seals the charge/discharge body 100 together with the case 201. The charge/discharge body 100 sealed by the case 201 and the lid 202 is filled with an electrolyte.

As illustrated in Figure 1, the external terminal 300 includes a positive electrode terminal 301 and a negative electrode terminal 302. The positive electrode terminal 301 and the negative electrode terminal 302 relay input and output of electric power between the charge/discharge body 100 and an external device. In addition, in a case where a battery pack is configured by using a plurality of batteries 1, the other negative electrode terminal 302 adjacent to one of the adjacent positive electrode terminals 301 is joined via a bus bar. The positive electrode terminal 301 is indirectly or directly bonded to the positive electrode tab 111b via a positive electrode current collector plate. The negative electrode terminal 302 is indirectly or directly bonded to the negative electrode tab 121b via a negative electrode current collector plate. The positive electrode terminal 301 and the negative electrode terminal 302 are attached to the lid 202.

### (Manufacturing Method of Battery Including Negative Electrode of Example According to First Embodiment)

The battery including the negative electrode of an example according to the first embodiment can be manufactured by using a technique known in the technical field of the present invention except for the manufacturing method of the negative electrode.

The negative electrode 120 of the example according to the first embodiment can be manufactured, for example, as follows. First, materials included in the negative electrode first active material layer 123 (for example, an additive such as a negative electrode first active material, a conductive auxiliary agent, or a binder) is prepared. The materials may be in powder form. These materials are then mixed and the resulting mixture is dispersed in a solvent (e.g., N-methyl-2-pyrrolidone (NMP) and/or water) to prepare a negative electrode first slurry. Next, the negative electrode first slurry is applied to the surface (one side or both sides) of the negative electrode current collector 121 by a known technique, dried, and subjected to calendering treatment as necessary to form the negative electrode first active material layer 123.

Subsequently, materials (for example, an additive such as a negative electrode second active material, a conductive auxiliary agent, or a binder) included in the negative electrode second active material layer 124 is prepared. The materials may be in powder form. These materials are then mixed and the resulting mixture is dispersed in a solvent (e.g., N-methyl-2-pyrrolidone (NMP) and/or water) to prepare a second negative electrode slurry. Next, the negative electrode second slurry is applied to the surface (one side or both sides) of the negative electrode first active material layer 123 by a known technique, dried, and subjected to calendering treatment if necessary to form the negative electrode second active material layer 124. The negative electrode 120 is obtained by the above-described manufacturing method. However, the negative electrode 120 is not limited to the one manufactured by the above manufacturing method, and may be manufactured by another method.

### (Effect of Battery Including Negative Electrode of Example According to First Embodiment)

An effect of the battery including the negative electrode of an example according to the first embodiment will be described with reference to Figure 4.

In the negative electrode 120 of the example according to the first embodiment, the negative electrode active material layer 122 includes a negative electrode first active material layer 123 laminated on the negative electrode current collector 121 and a negative electrode second active material layer 124 laminated on the negative electrode first active material layer 123. The average particle diameter of the negative electrode second active material 124a of the negative electrode second active material layer 124 is smaller than the average particle diameter of the negative electrode first active material 123a of the negative electrode first active material layer 123. Accordingly, the BET specific surface area of the negative electrode second active material 124a of the negative electrode second active material layer 124 is larger than the BET specific surface area of the negative electrode first active material 123a of the negative electrode first active material layer 123. Therefore, in the negative electrode active material layer 122, the negative electrode second active material layer 124 including the negative electrode second active material 124a having a large reacting area with lithium ions is disposed on the separator 130 side, which is the receiving side of lithium ions when the battery 1 is charged. Therefore, Li is precipitated on the separator 130 side of the negative electrode active material layer 122, and side reactions caused by the deposition of Li are suppressed, so that the durability of the battery 1 can be improved and the life of the battery 1 can be extended. Furthermore, a rapid charging performance of the battery 1 can be improved. On the other hand, since the negative electrode first active material layer 123 including the negative electrode first active material 123a having a small reaction area with lithium ions is disposed on the opposite side of the negative electrode current collector 121, it is possible to suppress an increase in the amount of lithium ions trapped in the negative electrode active material and not contributing to the subsequent battery reaction. Therefore, the cycle characteristics of the battery 1 can be improved, and the storage durability of the battery 1 can be improved. Therefore, the life of the battery 1 can be extended. Therefore, the charging performance and the long life can be improved in the negative electrode 120.

More specifically, the reaction area of the negative electrode active material per unit volume in the negative electrode active material layer is relatively larger in the negative electrode second active material layer as the high input/output layer than in the negative electrode first active material layer as the high capacity layer. The negative electrode second active material layer has a relatively shorter diffusion path of lithium ions than the negative electrode first active material layer. Therefore, the charging characteristics of the battery, in particular, the rapid charging characteristics can be improved in the negative electrode second active material layer. On the other hand, the reaction area of the negative electrode active material per unit volume in the negative electrode active material layer is relatively smaller in the negative electrode first active material layer as the high capacity layer than in the negative electrode second active material layer as the high input/output layer. Therefore, in the negative electrode first active material layer which is a high capacity layer, a cycle durability and storage durability of lithium ions in a case where the battery is repeatedly charged and discharged can be improved.

In the negative electrode 120, the negative electrode first active material 123a included in the negative electrode first active material layer 123 contains a pitch-coated natural graphite 123a1, a natural graphite 123a2 exposed without being coated on the surface, and an artificial graphite 123a3. Since the surface of the pitch-coated natural graphite 123a1 is pitch-coated, the pitch-coated natural graphite 123a1 has a higher conductivity and a smaller reaction area with lithium ions than that of the normal natural graphite (natural graphite exposed without coating the surface) 123a2, but since it is hard, when the negative electrode first active material 123a is composed only of the pitch-coated natural graphite 123a1, the press formability at the time of forming the negative electrode first active material layer 123 is lowered. On the other hand, in the negative electrode 120, in addition to the pitch-coated natural graphite 123, the normal natural graphite (natural graphite exposed without being coated on the surface) 123a2 that is softer than the pitch-coated natural graphite 123a1 is further contained in the negative electrode first active material 123a, whereby the reaction area of the negative electrode first active material 123a can be suppressed, and the press formability at the time of forming the negative electrode first active material layer 123 can be improved while sufficiently securing the conductivity of the negative electrode first active material 123a. Accordingly, the cycle characteristics of the battery 1 can be further improved, and the energy density of the battery 1 can be improved. Further, since the ease of pressing can be arbitrarily controlled, it is easy to set the negative electrode first active material layer to a predetermined density or to set the thickness to a predetermined thickness.

Similar to the negative electrode first active material 123a, the negative electrode second active material 124a included in the negative electrode second active material layer 124 also contains a pitch-coated natural graphite 124a1 and a natural graphite 124a2 that is exposed without being coated. Therefore, similarly, the reaction area of the negative electrode second active material 124a can be suppressed, and the press formability at the time of forming the negative electrode second active material layer 124 can be improved while the conductivity of the negative electrode second active material 124a is sufficiently secured. Accordingly, the cycle characteristics of the battery 1 can be further improved, and the energy density of the battery 1 can be further improved. Further, since the ease of pressing can be arbitrarily controlled, it is easy to set the negative electrode second active material layer to a predetermined density or to set the thickness to a predetermined thickness.

Further, in the battery 1 including the negative electrode 120, when the electrolyte further includes an SEI film-forming agent, the cycle characteristics of the battery 1 can be further improved by suppressing the reaction of the surface of the negative electrode active material and the electrolyte, and the storage durability of the battery 1 can be further improved.

Next, the configuration of the negative electrode for the lithium ion secondary battery according to the first embodiment and the lithium ion secondary battery including the negative electrode will be described in more detail.

### 1. Negative Electrode for Lithium Ion Secondary Battery

The negative electrode for the lithium ion secondary battery according to the first embodiment includes a negative electrode current collector and a negative electrode active material layer laminated on the negative electrode current collector, and the negative electrode active material layer includes a negative electrode first active material layer laminated on the negative electrode current collector and a negative electrode second active material layer laminated on the negative electrode first active material layer.

### (1) Negative Electrode First Active Material Layer

The negative electrode first active material layer includes a negative electrode first active material. The negative electrode first active material is not particularly limited as long as it contains a negative electrode active material capable of intercalating and deintercalating lithium ions, but contains at least one selected from the group consisting of carbon materials such as a natural graphite, an artificial graphite (a man-made graphite), a hardly graphitizable carbon (a hard carbon), and an easily graphitizable carbon (a soft carbon), and a graphite coated with an amorphous carbon.

The negative electrode first active material preferably contains a pitch-coated natural graphite and a natural graphite that is exposed without being coated on the surface, and particularly preferably contains the pitch-coated natural graphite, the natural graphite that is exposed without being coated on the surface, and the artificial graphite. This is because the press formability at the time of forming the negative electrode first active material layer can be improved while suppressing the reaction area of the negative electrode first active material and sufficiently securing the conductivity of the negative electrode first active material. In addition, the characteristics of the negative electrode active material can be improved by the man-made graphite having a high purity and a high crystal uniformity.

The negative electrode first active material layer is not particularly limited as long as it contains a negative electrode first active material, but for example, it is preferable that the negative electrode first active material further contains at least one additive selected from the group consisting of a conductive auxiliary agent, a binder and the like in addition to the negative electrode first active material.

As the conductive auxiliary agent of the negative electrode first active material layer, a carbon-based material can be used. As the carbon-based material, a crystalline carbon, an amorphous carbon, or a mixture thereof can be used. Examples of the crystalline carbon include a natural graphite (e.g., a scaly graphite), an artificial graphite, carbon fibers, or mixtures thereof. Examples of the amorphous carbon include carbon black (e.g., acetylene black, Ketjen black, channel black, furnace black, lamp black, thermal black, or mixtures thereof). Examples of the carbon fibers include carbon nanotubes.

As the binder of the negative electrode first active material layer, for example, polyvinylidene fluoride (PVdF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethyl cellulose, various latexes, acrylic resins, polyamideimide, polyimide, or mixtures thereof can be used.

The ratio of the weight of the negative electrode first active material to the total weight of the negative electrode first active material layer is preferably, for example, 80 wt% or more and 99 wt% or less.

The thickness (for example, the first thickness T1 in Figure 4) of the negative electrode first active material layer on one side in the laminating direction (for example, the depth direction Y in Figure 4) may be, for example, 5 µm or more and 500 µm or less in average thickness, or may be, for example, 10 µm or more and 300 µm or less in average thickness.

### (2) Negative Electrode Second Active Material Layer

The negative electrode second active material layer includes a negative electrode second active material. The negative electrode second active material is not particularly limited as long as it contains a negative electrode active material capable of intercalating and deintercalating lithium ions, but contains, for example, at least one selected from the same group as the negative electrode first active material.

The negative electrode second active material preferably contains a pitch-coated natural graphite and a natural graphite that is exposed without being coated on the surface, and particularly preferably contains the pitch-coated natural graphite, the natural graphite that is exposed without being coated on the surface, and an artificial graphite. This is because the press formability at the time of forming the negative electrode first active material layer can be improved while suppressing the reaction area of the negative electrode first active material and sufficiently securing the conductivity of the negative electrode first active material. In addition, the characteristics of the negative electrode active material can be improved by the man-made graphite having a high purity and a high crystal uniformity.

The negative electrode second active material layer is not particularly limited as long as it contains a negative electrode second active material, but for example, it is preferable that the negative electrode second active material further contains at least one additive selected from the group consisting of a conductive auxiliary agent, a binder and the like in addition to the negative electrode second active material. As the conductive auxiliary agent of the negative electrode second active material layer, for example, the same material as that of the negative electrode first active material layer is used. As the binder of the negative electrode second active material layer, for example, the same binder as that of the negative electrode first active material layer is used.

The ratio of the weight of the negative electrode second active material to the total weight of the negative electrode second active material layer is preferably, for example, 80 wt% or more and 99 wt% or less.

The thickness (for example, the first thickness T2 in Figure 4) of the negative electrode second active material layer on one side in the laminating direction (for example, the depth direction Y in Figure 4) may be, for example, 5 µm or more and 500 µm or less in average thickness, or may be, for example, 10 µm or more and 300 µm or less in average thickness.

### (3) Negative Electrode Active Material Layer

The BET specific surface area of the negative electrode second active material is larger than the BET specific surface area of the negative electrode first active material. Here, the BET specific surface area can be calculated from the BET method using, for example, a pore size distribution measuring device. The BET specific surface area of the negative electrode first active material is obtained, for example, by extracting only the negative electrode first active material as a sample from a part of the negative electrode first active material layer and measuring the BET specific surface area of the sample. Further, the BET specific surface area of the negative electrode first active material may be obtained by measuring the BET specific surface area of the powdery material of the negative electrode first active material used when the negative electrode first active material layer is formed. The BET specific surface area of the negative electrode second active material is also determined in the same manner as the BET specific surface area of the negative electrode first active material.

The negative electrode active material layer are not particularly limited as long as the BET specific surface area of the negative electrode second active material is larger than that of the negative electrode first active material, but it is preferable that, for example, the BET specific surface area of the negative electrode first active material is 1 m²/g or more and 6 m²/g or less and the BET specific surface area of the negative electrode second active material is 4 m²/g or more and 10 m²/g or less. This is because the side reactions caused by Li deposition is effectively suppressed on the separator side of the negative electrode active material layer, and the rapid charge performance of the battery can be effectively improved.

The negative electrode active material layer is not particularly limited as long as the BET specific surface area of the negative electrode second active material is larger than that of the negative electrode first active material, but for example, the negative electrode second active material preferably has an average particle diameter smaller than the average particle diameter of the negative electrode first active material. This is because the BET specific surface area of the negative electrode second active material can be made larger than the BET specific surface area of the negative electrode first active material only by making the average particle diameter of the negative electrode second active material smaller than the average particle diameter of the negative electrode first active material, so that the rapid charge performance of the battery can be easily improved.

Here, the average particle diameter is, for example, a median diameter (D50), and the median diameter (D50) is a diameter of a particle when the integrated value is 50% in a particle size distribution measurement by a laser diffraction scattering type particle size distribution measurement method. As the median diameter (D50), the diameter of the particle when the integrated value is 50% may be determined, the diameter being a particle diameter when the integrated value in the particle size distribution of the active material obtained from a result of the following measurement is 50%. The measurement is carried out by measuring a projected area equivalent circle diameter of 100 or more randomly selected active material particles based on a microscopic image of each active material layer in the laminated cross section of the battery.

Regarding the median diameter of the negative electrode first active material and the median diameter of the negative electrode second active material, the median diameter of the negative electrode second active material are preferably smaller than the median diameter of the negative electrode first active material, but especially, for example, the median diameter of the negative electrode first active material is preferably 10 µm or more and 35 µm or less, and the median diameter of the negative electrode second active material is preferably 2 µm or more and 15 µm or less. This is because the side reactions caused by Li deposition is effectively suppressed on the separator side of the negative electrode active material layer, and the rapid charge performance of the battery can be effectively improved.

The BET specific surface area of the negative electrode second active material may be larger than the BET specific surface area of the negative electrode first active material because the smoothness of the surface of the negative electrode second active material is smaller than the smoothness of the surface of the negative electrode first active material. Examples of such a negative electrode active material layer include those in which the negative electrode first active material contains a pitch-coated natural graphite and the negative electrode second active material contains a natural graphite that is exposed without being coated on the surface.

### (4) Manufacturing Method

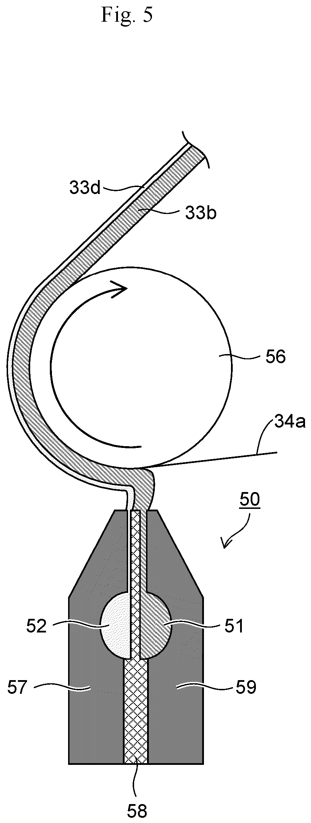

As a method for manufacturing the negative electrode for a lithium ion secondary battery according to the first embodiment, a manufacturing method in which the negative electrode first active material layer and the negative electrode second active material layer of the negative electrode active material layer are simultaneously coated may be used. Hereinafter, this manufacturing method will be described with reference to Figure 5.

In this manufacturing method, materials (for example, an additive such as a negative electrode first active material, a conductive auxiliary agent, or a binder) included in the negative electrode first active material layer are prepared. These materials are mixed and the resulting mixture is dispersed in a solvent (e.g., N-methyl-2-pyrrolidone (NMP) and/or water) to obtain a negative electrode first slurry. Further, materials (for example, an additive such as a negative electrode second active material, a conductive auxiliary agent, or a binder) included in the negative electrode second active material layer are prepared. These materials are mixed and the resulting mixture is dispersed in a solvent (e.g., N-methyl-2-pyrrolidone (NMP) and/or water) to obtain a negative electrode second slurry.

Next, for example, the negative electrode first slurry and the negative electrode second slurry are simultaneously applied onto the negative electrode current collector 34a using the die head 50 as shown in Figure 5. The die head 50 has an outlet block 57, a three-dimensional shim 58, and an inlet block 59. Inside the die head 50, a negative electrode second slurry manifold 52 and a negative electrode first slurry manifold 51 are provided. The negative electrode second slurry and the negative electrode first slurry are simultaneously discharged from the manifolds 52 and 51 toward the negative electrode current collector 34a conveyed along the back roller 56. Thereby, the negative electrode second slurry layer 33d and the negative electrode first slurry layer 33b are formed. Next, the negative electrode first slurry layer 33b and the negative electrode second slurry layer 33d are dried by volatilizing the solvents contained in the negative electrode first slurry layer 33b and the negative electrode second slurry layer 33d in a drying oven etc. Thereby, a negative electrode first active material layer (not shown) and a negative electrode second active material layer (not shown) are formed on one surface of the negative electrode current collector 34a. Next, the negative electrode current collector 34a, the negative electrode first active material layer, and the negative electrode second active material layer are pressed. Specifically, the laminate including the negative electrode current collector 34a, the negative electrode first active material layer, and the negative electrode second active material layer is sandwiched between rolls at 0 to 120 °C and is pressed. Thereafter, the laminate is slit to a predetermined width. Thereby, a negative electrode is obtained.

In the battery including the negative electrode manufactured by the manufacturing method to which the simultaneous coating of the two or more layers is applied, a layer in which the negative electrode first active material and the negative electrode second active material are mixed can be formed at the interface between the negative electrode first active material layer and the negative electrode second active material layer. Since the mixed layer serves as a buffer layer that relaxes the difference in expansion and contraction between the negative electrode first active material layer and the negative electrode second active material layer, the effect of relaxing the separation between the negative electrode first active material layer and the negative electrode second active material layer during charging and discharging can be obtained.

Further, the interface between the negative electrode first active material layer (the negative electrode first slurry layer 33b) and the negative electrode second active material layer (the negative electrode second slurry layer 33d) is not pressed by rolling. For example, the interface of the negative electrode second active material layer (the negative electrode second slurry layer 33d) facing away from the negative electrode first active material layer (the negative electrode first slurry layer 33b) is pressed by rolling. Accordingly, the interface between the negative electrode first active material layer (the negative electrode first slurry layer 33b) and the negative electrode second active material layer (the negative electrode second slurry layer 33d) has a larger unevenness than the interface between the negative electrode second active material layer (the negative electrode second slurry layer 33d). Accordingly, the negative electrode first active material layer (the negative electrode first slurry layer 33b) has a large surface area. Therefore, it is preferable in ion conduction. Further, when the interface between the negative electrode first active material layer (the negative electrode first slurry layer 33b) and the negative electrode second active material layer (the negative electrode second slurry layer 33d) forms a larger unevenness than the surface of the negative electrode second active material layer (the negative electrode second slurry layer 33d) facing the roll, adhesion is also good, and a stable ionic conductivity can be obtained.

### 2. Lithium Ion Secondary Battery

The lithium ion secondary battery according to the first embodiment is a lithium ion secondary battery including a positive electrode, a negative electrode, and an electrolyte, and the negative electrode is a negative electrode for a lithium ion secondary battery according to the first embodiment.

The lithium ion secondary battery according to the first embodiment is not particularly limited, but includes, for example, a charge/discharge body including a positive electrode, a negative electrode, and a separator, and the electrolyte is impregnated in the separator. The lithium ion secondary battery according to the first embodiment may include an electrolyte in which the electrolyte is dissolved, and the electrolyte may further include an additive such as an SEI film-forming agent, and among them, the electrolyte preferably includes the SEI film-forming agent. The negative electrode can be protected by the SEI film-forming agent. Therefore, the cycle durability of the negative electrode active material in the case where the battery is repeatedly charged and discharged can be improved.

Here, the SEI film is an organic film called SEI (Solid Electrolyte Interface) formed on the surface of the negative electrode active material layer 122, and serves to suppress an excessive decomposition of the electrolyte solution and prevent degradation of the cycle characteristics of the battery **1.** The SEI film-forming agent refers to an additive that is added to the electrolyte so that the SEI film is formed. As the SEI film-forming agent, for example, vinylene carbonate (VC), fluoroethylene carbonate (FEC) or the like is used.

Further, the lithium ion secondary battery according to the first embodiment may be a battery including a solid electrolyte as an electrolyte, and may include a positive electrode, a negative electrode, and a solid electrolyte layer including the solid electrolyte, and a charge/discharge body in which the solid electrolyte layer is interposed between the positive electrode and the negative electrode.

A battery including such a solid electrolyte does not need to include an electrolyte solution, and thus can have high safety. Further, an effect is obtained that the battery including such a solid electrolyte has a good reactivity in the active material particle surface, and thus can contribute to a stable ion conduction. In addition, it is preferable that the interface between the negative electrode second active material layer and the solid electrolyte layer has a larger unevenness in the thickness direction than the interface between the negative electrode second active material layer and the solid electrolyte layer on the opposite side of the solid electrolyte layer. It is preferable for a lithium ion transfer because of its high adhesion.

Examples of solid electrolytes include sulphide-based solid electrolytes, such as Li₁₀GeP₂S₁₂, Li₆PS₅Cl and Li₂S-P₂S₅ glasses, Li₂S-SiS₂ glasses, Li₂S-P₂S₅-GeS₂ glasses, Li₂S-B₂S₃ glasses, oxide-based solid electrolytes, such as Li₇La₃Zr₂O₁₂, LiLaTiO₃, LiTi(PO₄)₃, LiGe(PO₄)₃ and complex hydride solid electrolytes, such as LiBH₄-LiI, LiBH₄-LiNH₂, and mixtures of two or more of these.

### 3. Other

The battery including the negative electrode of another example according to the first embodiment may be a separatorless battery including a positive electrode electronic insulation layer provided on the positive electrode and a negative electrode electronic insulation layer provided on the negative electrode, instead of the separator.

### (Configuration of Separatorless Battery Including Negative Electrode of Another Example According to Embodiment)

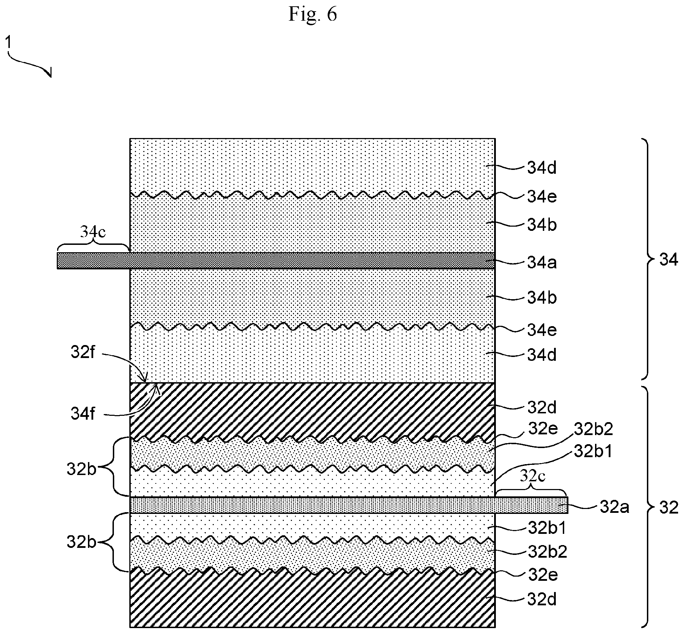

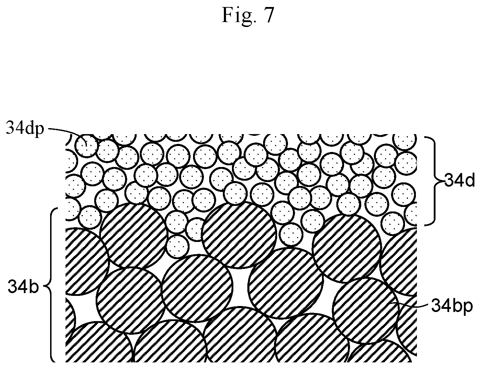

Hereinafter, a configuration of such a separatorless battery will be described with reference to Figures 6 and 7.

As shown in Figure 6, in a separatorless battery 1 (a lithium ion secondary battery) including a negative electrode 32 according to another embodiment, a positive electrode 34 includes a positive electrode current collector 34a, a positive electrode active material layer 34b bonded to both surfaces of the positive electrode current collector 34a, and a positive electrode electronic insulation layer 34d bonded to each of the positive electrode active material layer 34b (positive electrode mixture layer). The negative electrode 32 includes a negative electrode current collector 32a and a negative electrode active material layer 32b (negative electrode mixture layer) bonded to both surfaces of the negative electrode current collector 32a, and the negative electrode active material layer 32b includes a negative electrode first active material layer 32b1 bonded to both surfaces of the negative electrode current collector 32a and a negative electrode second active material layer 32b2 bonded to each of the negative electrode first active material layer 32b1. The negative electrode 32 further includes a negative electrode electronic insulation layer 32d bonded to each of the negative electrode second active material layers 32b2.

One end of the positive electrode current collector 34a is provided with a portion 34c that is not covered with either the positive electrode active material layer 34b or the positive electrode electronic insulation layer 34d (hereinafter referred to as a "positive electrode current collector exposed portion"). The positive electrode current collector exposed portion 34c is provided on the end face of the wound group (not shown) and in the vicinity thereof. The positive electrode current collector exposed portion 34c faces and is electrically connected to a positive connection end (not shown) of a positive electrode current collector plate (not shown). Similarly, one end of the negative electrode current collector 32a is provided with a portion 32c (hereinafter referred to as "negative electrode current collector exposed portion") that is not covered with either the negative electrode active material layer 32b or the negative electrode electronic insulation layer 32d. The negative electrode current collector exposed portion 32c is provided on the end face of the wound group and in the vicinity thereof. The negative electrode current collector exposed portion 32c faces and is electrically connected to a negative connection end (not shown) of a negative electrode current collector plate (not shown).

The positive electrode electronic insulation layer 34d and the negative electrode electronic insulation layer 32d have a function of preventing a short circuit between the positive electrode active material layer 34b and the negative electrode active material layer 32b, and a function of conducting ions between the positive electrode active material layer 34b and the negative electrode active material layer 32b. The positive electrode electronic insulation layer 34d and the negative electrode electronic insulation layer 32d may be a porous layer made of a material having an electrically insulating (i.e., electronically insulating and ionically insulating). The porous layer can retain the electrolyte in the pores thereof, and can conduct ions between the positive electrode active material layer 34b and the negative electrode active material layer 32b through the electrolyte.

The positive electrode electronic insulation layer 34d and the negative electrode electronic insulation layer 32d that is porous may also have a function of buffering expansion and contraction of the positive electrode active material layer 34b and the negative electrode active material layer 32b caused by charging and discharging of the lithium ion secondary battery 100. The expansion and contraction of the negative electrode active material layer 32b with the charging and discharging of the battery 1 is generally larger than the expansion and contraction of the positive electrode active material layer 34b. Therefore, the negative electrode electronic insulation layer 32d may have an average pore diameter larger than the average pore diameter of the positive electrode electronic insulation layer 34d so that the expansion and contraction of the larger negative electrode active material layer 32b can be buffered. In the present application, the average pore diameter of the positive electrode electronic insulation layer 34d and the negative electrode electronic insulation layer 32d means an average volumetric pore diameter measured by a mercury intrusion porosimetry.

The sum of Na and Fe contents of the positive electrode electronic insulation layer 34d and the negative electrode electronic insulation layer 32d may be 300 ppm or less based on the weights of the positive electrode electronic insulation layer 34d and the negative electrode electronic insulation layer 32d. The amounts of the respective elements contained in the positive electrode electronic insulation layer 34d and the negative electrode electronic insulation layer 32d can be measured by an ICP (Inductive Coupled Plasma) method.

The positive electrode electronic insulation layer 34d may include positive electrode electronic insulation particles, and the negative electrode electronic insulation layer 32d may include negative electrode electronic insulation particles. Hereinafter, the positive electrode electronic insulation particles and the negative electrode electronic insulation particles are collectively referred to as electronic insulation particles as appropriate. The electronic insulation particles may be electrical insulation particles. Examples of electrical insulation particles include ceramic particles. The ceramic particles may contain at least one selected from the group consisting of alumina (Al₂O₃), boehmite (Al₂O₃ hydrate), magnesia (MgO), zirconia (ZrO₂), titania (TiO₂), iron oxide, silica (SiO₂), and barium titanate (BaTiO₂), and preferably contain at least one selected from the group consisting of alumina, boehmite, magnesia, zirconia, and titania. The electronic insulation particles may have an average particle diameter in the range of 0.7 to 1.1 µm. The average particle diameter of the electronic insulation particles can be obtained by calculating the arithmetic average of the projected area circle equivalent diameters of the 100 or more electronic insulation particles selected at random based on the microscopic observation images of the positive electrode electronic insulation layer 34d and the negative electrode electronic insulation layer 32d. The electronic insulation particles may contain at least one of Na of 100 to 200 ppm, Fe of 50 to 100 ppm or Ca of 50 to 100 ppm, based on the weight of the electronic insulation particles.

The positive electrode electronic insulation layer 34d and the negative electrode electronic insulation layer 32d may further include a binder. The binder may be dispersed or dissolved in an aqueous solvent or a nonaqueous solvent (e.g., N-methyl-2-pyrrolidone (NMP)), and may contain, for example, at least one selected from the group consisting of polyvinylidene fluoride (PVDF), polytetrafluoroethylene (PTFE), polyacrylic acid (PAA), and carboxymethylcellulose (CMC).

The positive electrode electronic insulation layer 34d and the negative electrode electronic insulation layer 32d may further include a dispersant. The dispersant may contain at least one selected from the group consisting of a carboxylic acid compound and a phosphoric acid compound.

The interface 34e between the positive electrode electronic insulation layer 34d and the positive electrode active material layer 34b has an uneven configuration, and the uneven height thereof is 2 µm or more, preferably 2 to 4 um. The interface 32e between the negative electrode electronic insulation layer 32d and the negative electrode active material layer 32b (the negative electrode second active material layer 32b2) has an uneven configuration, and the uneven height thereof is 2 µm or more, preferably 2 to 4 µm. The adhesion between the positive electrode electronic insulation layer 34d and the positive electrode active material layer 34b and the adhesion between the negative electrode electronic insulation layer 32b and the negative electrode active material layer 32d and between the negative electrode electronic insulation layer 32d and the negative electrode active material layer 32b can be improved because the uneven height of the interface 32e between the positive electrode electronic insulation layer 34d and the positive electrode active material layer 34b is 2 µm or more. Accordingly, it is possible to prevent or reduce the separation of the positive electrode electronic insulation layer 34d and the negative electrode electronic insulation layer 32d from the positive electrode active material layer 34b and the negative electrode active material layer 32b, respectively, and to improve the reliability of the lithium ion secondary battery 100.

The uneven height of the interface 34b between the positive electrode active material layer 34d and the positive electrode electronic insulation layer 34e can be controlled by, for example, the particle diameters of the positive electrode active material particles (positive electrode active material) included in the positive electrode active material layer 34b and the positive electrode electronic insulation particles included in the positive electrode electronic insulation layer 34d. As shown in Figure 7, when the average particle diameter of the positive electrode active material particles 34bp (positive electrode active material) included in the positive electrode active material layer 34b is larger than the average particle diameter of the positive electrode electronic insulation particles 34dp included in the positive electrode electronic insulation layer 34d, the positive electrode electronic insulation particles 34dp enters the gap between the positive electrode active material particles 34bp, and the interface 34e between the positive electrode active material layer 34b and the positive electrode electronic insulation layer 34d becomes uneven. For example, by using a spherical positive electrode active material particles 34bp having an average particle diameter in the range of 4.5 to 5.5 µm and positive electrode electronic insulation particles 34dp having an average particle diameter in the range of 0.7 to 1.1 µm, the uneven height of the interface 34e between the positive electrode active material layer 34b and the positive electrode electronic insulation layer 34d can be set to 2 µm or more, preferably 2 to 4 µm.

Similarly, the uneven height of the interface 32b between the negative electrode active material layer 32b2 and the negative electrode electronic insulation layer 32d can be controlled by the particle diameters of the negative electrode second active material particles (negative electrode second active material) included in the negative electrode second active material layer 32b2 and the negative electrode electronic insulation particles included in the negative electrode electronic insulation layer 32d. For example, by using scaly negative electrode second active material particles having an average particle diameter in the range of 9 to 11 µm and negative electrode electronic insulation particles having an average particle diameter in the range of 0.7 to 1.1 µm, the uneven height of the interface 32e between the negative electrode active material layer 32b and the negative electrode electronic insulation layer 32d can be set to 2 µm or more, preferably 2 to 4 µm.

In the present application, the interface 34e between the positive electrode electronic insulation layer 34d and the positive electrode active material layer 34b and the uneven height of the interface 32e between the negative electrode active material layer 32b (the negative electrode second active material layer 32b2) and the negative electrode electronic insulation layer 32d are measured as follows. A scanning electron microscopy (SEM) obtains cross-sectional SEM images of any three positions of the positive electrode 34 or the negative electrode 32. And distances from any ten or more points on the interface 34e, 32e to a predetermined reference plane are measured (for example, distances from any ten or more points on the interface 34e, 32e to the surface 34f of the positive electrode electronic insulation layer 34d, distances from 32f of the negative electrode electronic insulation layer 32d, that is, thicknesses of the positive electrode electronic insulation layer 34d and thicknesses of the negative electrode electronic insulation layer 32d at any ten or more points) in each of the cross-sectional SEM images. A standard deviation of the obtained distance values is defined as the uneven height of the interface 34e, 32e. In addition, the surface 34f of the positive electrode electronic insulation layer 34d and the surface 32f of the negative electrode electronic insulation layer 32d are surfaces facing each other, and may be sufficiently flat as compared with the interface 34e, 32e. For example, the uneven height of the front surface 34f, 32f of the positive electrode electronic insulation layer 34d and the negative electrode electronic insulation layer 32d may be 1/10 or less of the uneven height of the interface 34e, 32e.

The phrase "the interface 34d between the positive electrode electronic insulation layer 34b and the positive electrode active material layer 34e has an uneven configuration" may be replaced with "a positive electrode mixed layer including the positive electrode active material and the electronic insulation material between the positive electrode electronic insulation layer 34d and the positive electrode active material layer 34b." Similarly, the phrase "the interface 32d between the negative electrode electronic insulation layer 32b and the negative electrode active material layer 32e has an uneven configuration" can be referred to as "a negative electrode mixed layer including the negative electrode active material and the electronic insulation material between the negative electrode electronic insulation layer 32d and the negative electrode active material layer 32b." The thickness of the positive electrode mixed layer is 2 µm or more, preferably in the range of 2 to 4 µm. The thickness of the negative electrode mixed layer is 2 µm or more, preferably in the range of 2 to 4 µm. The thickness of the positive electrode mixed layer and the negative electrode mixed layer can be measured in the same manner as the uneven height of the interface 34e, 32e between the positive electrode electronic insulation layer 34d and the negative electrode electronic insulation layer 32d and the positive electrode active material layer 34b and the negative electrode active material layer 32b described above.

The positive electrode electronic insulation layer 34d and the negative electrode electronic insulation layer 32d may be contacted with each other. Preferably, the positive electrode electronic insulation layer 34d and the negative electrode electronic insulation layer 32d may be contacted with each other without being fixed. Since the positive electrode electronic insulation layer 34d and the negative electrode electronic insulation layer 32d are not fixed to each other, stresses caused by expansion and contraction of the negative electrode active material layer 32b and the positive electrode active material layer 34b due to charge and discharge of the lithium ion secondary battery 100 can be relaxed, and dendrites that can cause a short circuit between the positive electrode active material layer 34b and the negative electrode active material layer 32b can be prevented or reduced from growing through the positive electrode electronic insulation layer 34d and the negative electrode electronic insulation layer 32d.

The peel strength of the positive electrode electronic insulation layer 34d with respect to the positive electrode active material layer 34b and the peel strength of the negative electrode electronic insulation layer 32d with respect to the negative electrode active material layer 32b may be higher than the peel strength of the positive electrode electronic insulation layer 34d with respect to the negative electrode electronic insulation layer 32d. The peel strength can be measured, for example, by a 180° tape peel test according to JIS C 0806-3 1999.

The uneven height of the interface 34b between the positive electrode active material layer 34d and the positive electrode electronic insulation layer 34e can be controlled by the types and viscosities etc. of the solvents of the positive electrode electronic insulation material slurry used for forming by coating the positive electrode active material layer 34b and the positive electrode electronic insulation layer 34d in addition to the particle diameters of the positive electrode active material particles and the positive electrode electronic insulation particles described above. Similarly, the uneven height of the interface 32b (negative electrode second active material layer 32b2) between the negative electrode active material layer and the negative electrode electronic insulation layer 32d can also be controlled by the types and viscosities etc. of the solvents of the negative electrode electronic insulation material slurry used for the formation by the coating of the negative electrode active material layer 32b (negative electrode second active material layer 32b2) and the negative electrode electronic insulation layer 32d.

The average pore diameters of the positive electrode electronic insulation layer 34d and the negative electrode electronic insulation layer 32d can be controlled by the particle diameter of the electronic insulation particles, the press pressure in the press processing etc. Specifically, the higher the pressing pressure, the smaller the average pore diameter, and the smaller the particle diameter of the electronic insulation particles, the smaller the average pore diameter.

In the separatorless battery 1 including the positive electrode 34 described above, since the adhesion between the negative electrode active material layer 32b and the negative electrode electronic insulation layer 32d is high, a stable ionic conduction is realized. In addition, the battery 1 of the other example as described above can contribute to the provision of a battery having a high energy density and a long life by mounting an electrode manufactured by a manufacturing method to which the above-described simultaneous coating of two layers is applied or an electrode manufactured by a manufacturing method to which the simultaneous coating of three layers described later is applied.

### (Modified Example)

Further, in a modified example of the separatorless battery 1 (lithium ion secondary battery) including the negative electrode 32 of the other example described above, each of the positive electrode electronic insulation layer 34d and the negative electrode electronic insulation layer 32d is a layer including a solid electrolyte (that is, an electronically insulating and ionically conductive material). The battery (lithium ion secondary battery) of this modified example does not need to include an electrolyte solution, and thus can have high safety. In this modified example, the electronic insulation particles included in the positive electrode electronic insulation layer 34d and the negative electrode electronic insulation layer 32d may be solid electrolyte particles. Since the solid electrolyte can be satisfactorily formed by press molding, in this case, it is not essential that the positive electrode electronic insulation layer 34d and the negative electrode electronic insulation layer 32d contain a binder and a dispersant.

Further, the positive electrode active material layer 34b may further contain a solid electrolyte in addition to the active material and an optional binder, a conductive auxiliary agent, and a dispersant. Accordingly, the ionic conductivity of the positive electrode active material layer 34b can be improved.

At least one of the negative electrode first active material layer 32b1 and the negative electrode second active material layer 32b2 included in the negative electrode active material layer 32b may further contain a solid electrolyte in addition to the electrode active material and an optional binder, a conductive auxiliary agent, and a dispersant. Accordingly, the ionic conductivity of at least one of the negative electrode first active material layer 32b1 and the negative electrode second active material layer 32b2 can be improved.

In the battery of the modified example described above, since it is not necessary to include an electrolyte and the strength of the electronic insulation layer (the positive electrode electronic insulation layer 34d and the negative electrode electronic insulation layer 32d) is higher than that of the separator, it is possible to realize a high safety. Further, the battery of such a modified example can contribute to the provision of a battery having a high energy density and a long life by mounting an electrode manufactured by a manufacturing method to which the above-described simultaneous coating of two layers is applied, or an electrode manufactured by a manufacturing method to which the simultaneous coating of three layers described later is applied.

### (Method for Manufacturing Separatorless Battery Including Negative Electrode of Another Example According to Embodiment)

Such a separatorless battery (lithium ion secondary battery) can be manufactured using a technique known in the technical field of the present invention except for the manufacturing method of the negative electrode of another example according to the embodiment.

In another example of the negative electrode 32 of another example according to the embodiment, for example, the negative electrode first active material layer 32b1, the negative electrode second active material layer 32b2, and the negative electrode electronic insulation layer 32d of the negative electrode active material layer 32b can be manufactured by simultaneous coating as follows.

First, materials (for example, a negative electrode active material, a conductive auxiliary agent, a binder, or the like) included in the negative electrode first active material layer 32b1 are prepared. These materials are mixed and the resulting mixture is dispersed in a solvent (e.g., N-methyl-2-pyrrolidone (NMP) and/or water) to obtain a negative electrode first slurry. Further, materials (for example, a negative electrode active material, a conductive auxiliary agent, a binder, or the like) included in the negative electrode second active material layer 32b2 are prepared. These materials are mixed and the resulting mixture is dispersed in a solvent (e.g., N-methyl-2-pyrrolidone (NMP) and/or water) to obtain a negative electrode second slurry. Further, materials (for example, negative electrode electronic insulation particles, a binder, a dispersant, and the like) included in the negative electrode electronic insulation layer 34d are prepared. These materials are mixed and the resulting mixture is dispersed in a solvent (e.g., N-methyl-2-pyrrolidone (NMP) and/or water) to obtain a negative electrode electronic insulator slurry.

Next, the negative electrode first slurry, the negative electrode second slurry, and the negative electrode electronic insulation material slurry are simultaneously coated on the negative electrode current collector. As a result, the negative electrode first slurry layer, the negative electrode second slurry layer, and the negative electrode electronic insulation material slurry layer are formed. Next, the solvent contained in the negative electrode first slurry layer, the negative electrode second slurry layer, and the negative electrode electronic insulation material slurry layer is volatilized by a drying furnace etc., and the negative electrode first slurry layer, the negative electrode second slurry layer, and the negative electrode electronic insulation material slurry layer are dried. As a result, the negative electrode first active material layer 32b1, the negative electrode second active material layer 32b2, and the negative electrode electronic insulation layer 32d are formed on one surface of the negative electrode current collector. Next, the negative electrode current collector, the negative electrode first active material layer and the negative electrode second active material layer 32b2, and the negative electrode electronic insulation layer 32d are pressed. Specifically, the laminate including the negative electrode current collector, the negative electrode first active material layer 32b1, the negative electrode second active material layer 32b2, and the negative electrode electronic insulation layer 32d is sandwiched between rolls heated to 60 to 120 °C and subjected to pressure. Thereafter, the laminate is slit to a predetermined width. Thereby, a negative electrode is obtained.

In the battery 1 including the negative electrode 32 manufactured by the manufacturing method to which the simultaneous coating of three or more layers is applied, as the structure of the positive electrode 32 is shown in Figure 6, since it is firmly adhered because it has unevenness at the interface of each layer, high safety and reliability can be obtained. Further, when this manufacturing method is applied to the lithium ion secondary battery of the above-described modified example, it is not necessary to include an electrolytic solution, and it is possible to obtain higher safety and reliability.

Further, the interface between the negative electrode active material layer 32b (the negative electrode second active material layer 32b2) and the negative electrode electronic insulation layer 32d is not pressed by rolling. For example, the interface of the negative electrode electronic insulation layer 32d facing away from the negative electrode active material layer 32b is pressed by a roll. As a result, the interface between the negative electrode active material layer 32b and the negative electrode electronic insulation layer 32d has a larger unevenness than the interface between the negative electrode electronic insulation layer 32d and the negative electrode. As a result, the negative electrode active material layer 32b have a large surface area. Therefore, it is preferable in ion conduction. Further, it is preferable that the interface between the negative electrode electronic insulation layer 32d and the negative electrode active material layer 32b has a larger unevenness than the surface of the negative electrode electronic insulation layer 32d facing the roll, because adhesion is also good and stable ionic conductivity is obtained.

### [Second Embodiment]

A negative electrode for a lithium ion secondary battery according to a second embodiment includes a negative electrode current collector, a negative electrode active material layer laminated on the negative electrode current collector, and the negative electrode active material layer includes a negative electrode first active material layer laminated on the negative electrode current collector, and a negative electrode second active material layer laminated on the negative electrode first active material layer. The negative electrode first active material layer includes a negative electrode first active material, and the negative electrode second active material layer includes a negative electrode second active material. At least one of the following conditions are satisfied: The density of the negative electrode second active material layer is lower than the density of the negative electrode first active material layer; and the negative electrode first active material layer and the negative electrode second active material layer include a conductive auxiliary agent, and the ratio of the weight of the conductive auxiliary agent to the total weight of the negative electrode second active material layer is larger than the ratio of the weight of the conductive auxiliary agent to the total weight of the negative electrode first active material layer. And the negative electrode first active material contains an Si-based material. The Si-based material may be pre-doped with lithium. The lithium ion secondary battery according to the second embodiment is a lithium ion secondary battery including a positive electrode, a negative electrode, and an electrolyte, and the negative electrode is the negative electrode for the lithium ion secondary battery according to the second embodiment.

### (Battery Including Negative Electrode of Example According to Second Embodiment)

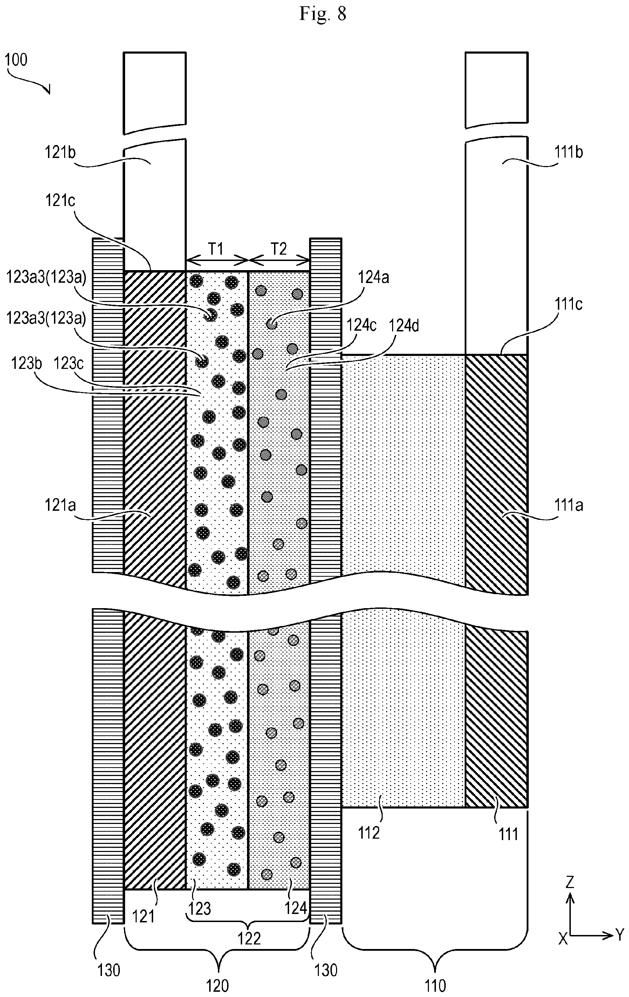

A configuration of a battery including a negative electrode of an example according to the second embodiment will be described with reference to Figure 8, focusing on a point different from the configuration of a battery including negative electrode of the example according to the first embodiment.

In the negative electrode 120 of the example according to the second embodiment, similarly to the negative electrode 120 of the example according to the first embodiment, the negative electrode active material layer 122 includes the negative electrode first active material layer 123 laminated on the negative electrode current collector 121 and the negative electrode second active material layer 124 laminated on the negative electrode first active material layer 123. That is, the negative electrode 120 includes a plurality of active material layers.

As illustrated in Figure 8, the negative electrode first active material layer 123 includes a negative electrode first active material 123a. The negative electrode first active material 123a contains an Si-based material 123a3 pre-doped with lithium. In addition to the negative electrode first active material 123a, the negative electrode first active material layer 123 further includes additives such as a conductive auxiliary agent 123c and a binder 123b. The negative electrode first active material layer 123 includes carbon nanotubes as the conductive auxiliary agent 123c. The negative electrode first active material layer 123 is a high-capacity layer capable of storing relatively large amount of lithium ions, and generally corresponds to a negative electrode active material layer used in an electric vehicle (BEV: Battery Electric Vehicle). The negative electrode second active material layer 124 generally corresponds to a negative electrode active material layer used in a hybrid vehicle (HEV: Hybrid Electric Vehicle).

As illustrated in Figure 8, the negative electrode second active material layer 124 includes a negative electrode second active material 124a. The negative electrode second active material 124a contains, for example, at least one selected from the group consisting of carbon materials such as a natural graphite, an artificial graphite (a man-made graphite), a hardly graphitizable carbon (a hard carbon), and an easily graphitizable carbon (a soft carbon), and a graphite coated with an amorphous carbon. The negative electrode second active material layer 124 further includes additives such as a conductive auxiliary agent 124c and a binder 124b in addition to the negative electrode second active material 124a.

In the negative electrode active material layer 122, the density of the negative electrode second active material layer 124 is lower than the density of the negative electrode first active material layer 123. Further, the ratio of the weight of the conductive auxiliary agent 124c to the total weight of the negative electrode second active material layer 124 is larger than the ratio of the weight of the conductive auxiliary agent 123c to the total weight of the negative electrode first active material layer 123.

Further, in the negative electrode active material layer 122, the average particle diameter of the negative electrode second active material 124a of the negative electrode second active material layer 124 is smaller than the average particle diameter of the negative electrode first active material 123a of the negative electrode first active material layer 123. Therefore, the BET specific surface area of the negative electrode second active material 124a of the negative electrode second active material layer 124 is larger than the BET specific surface area of the negative electrode first active material 123a of the negative electrode first active material layer 123.

The configuration of the battery 1 including the negative electrode 120 of the example according to the second embodiment is the same as the configuration of the battery 1 including the negative electrode 120 of the example according to the first embodiment except for the points described above.

### (Manufacturing Method of Battery Including Negative Electrode of Example According to Second Embodiment)

Further, the method for manufacturing a battery including the negative electrode of an example according to the second embodiment is the same as the method for manufacturing a battery including the negative electrode of an example according to the first embodiment, except that the material of an example according to the second embodiment is used as the material included in the negative electrode first active material layer 123 to prepare the negative electrode first slurry, and the material of an example according to the second embodiment is used as the material included in the negative electrode second active material layer 124 to prepare the negative electrode second slurry. In the method for manufacturing a battery including the negative electrode according to an example of the second embodiment, in order to make the density of the negative electrode second active material layer 124 lower than the density of the negative electrode first active material layer 123, for example, a method is used in which the pressing pressure at the time of forming the negative electrode second active material layer 124 is lower than the pressing pressure at the time of forming the negative electrode first active material layer 123.

### (Effect of Battery Including Negative Electrode of Example According to Second Embodiment)

An effect of the battery including the negative electrode of an example according to the second embodiment will be described with reference to Figure 8.

In the negative electrode 120 of the example according to the second embodiment, the negative electrode active material layer 122 includes a negative electrode first active material layer 123 laminated on the negative electrode current collector 121 and a negative electrode second active material layer 124 laminated on the negative electrode first active material layer 123. The density of the negative electrode second active material layer 124 is lower than the density of the negative electrode first active material layer 123. As a result, in the negative electrode active material layer 122, the negative electrode second active material layer 124 having a good liquid transfer of the electrolytic solution is disposed on the separator 130 side that serves as the receiving side of the lithium ions when the battery 1 is charged, so that the rapid charging performance of the battery 1 can be improved. Further, the ratio of the weight of the conductive auxiliary agent 124c to the total weight of the negative electrode second active material layer 124 is larger than the ratio of the weight of the conductive auxiliary agent 123c to the total weight of the negative electrode first active material layer 123. Since the negative electrode second active material layer 124 having a high conductivity is disposed on the separator 130 side that serves as the receiving side of lithium ions when the battery 1 is charged, the rapid charging performance of the battery 1 can be further improved.

On the other hand, when the density of the negative electrode second active material layer 124 is lower, or when the ratio of the weight of the conductive auxiliary agent 124c to the total weight of the negative electrode second active material layer 124 is larger, the energy density of the battery 1 may be reduced. In contrast, in the negative electrode 120, the negative electrode first active material 123a included in the negative electrode first active material layer 123 contains an Si-based material 123a3 pre-doped with lithium. For this reason, it is possible to prevent lithium ions contained in the positive electrode active material layer 112 of the positive electrode 110 from being consumed during the first charge/discharge of the battery 1 and from contributing to a subsequent battery reaction, and thus it is possible to suppress a decrease in the charge/discharge capacity of the battery 1. On the other hand, since the expansion and contraction of the Si-based material 123a3 are large due to the intercalation and deintercalation of lithium ions, the conductivity of the negative electrode first active material layer 123 may be lowered and the negative electrode 120 may be deformed due to the fact that the negative electrode first active material 123a contains the Si-based material 123a3. However, the negative electrode first active material layer 123 includes, as the conductive auxiliary agent 123c, carbon nanotubes having a particularly high conductivity enhancing effect, and further includes a binder 123b that binds the Si-based material 123a3 to each other. Therefore, a decrease in conductivity of the negative electrode first active material layer 123 can be suppressed, and deformation of the negative electrode 120 can be suppressed. Therefore, in the negative electrode 120, the reduction in the energy density of the battery 1 can be suppressed, and the cycle characteristics of the battery 1 can be improved. Therefore, the charging performance and the long life can be improved in the negative electrode 120.

More specifically, the area of the negative electrode active material per unit volume in the negative electrode active material layer that can be brought into contact with the electrolytic solution is relatively larger in the negative electrode second active material layer that is a high input/output layer than in the negative electrode first active material layer that is a high capacity layer. That is, in the negative electrode second active material layer, the electrolyte is more likely to be in contact with the negative electrode active material than the negative electrode first active material layer. Therefore, the charging characteristics of the battery, particularly, the rapid charging characteristics can be improved in the negative electrode second active material layer that is a high input/output layer. Here, the negative electrode first active material is, for example, silicon oxide (Li-SiO) in which silicon is pre-doped with lithium. Since silicon takes in and retains a certain amount of lithium as the battery is charged, the amount of the positive electrode active material of the positive electrode can be reduced by doping the lithium in advance. The expansion and contraction of the negative electrode active material per unit volume due to the charging and discharging of the battery is relatively larger in the negative electrode first active material layer which is a high capacity layer than in the negative electrode second active material layer which is a high input/output layer. In particular, the Si-based material contained in the negative electrode first active material has a larger expansion and contraction than the carbon-based material. However, the expansion and contraction of the negative electrode first active material and the like can be absorbed by the carbon nanotube and the binder included in the negative electrode first active material layer. Therefore, the cycle durability of the negative electrode first active material and the like and storage durability of lithium ions when the battery is repeatedly charged and discharged can be improved in the negative electrode first active material layer which is a high capacity layer.

When the ratio of the weight of the conductive auxiliary agent to the total weight of the negative electrode second active material layer is larger than the ratio of the weight of the conductive auxiliary agent to the total weight of the negative electrode first active material layer, the conductivity in the negative electrode active material layer is relatively larger in the negative electrode second active material layer which is a high input/output layer than in the negative electrode first active material layer which is a high capacity layer. Therefore, the charging characteristics of the battery, particularly, the rapid charging characteristics can be improved in the negative electrode second active material layer. On the other hand, since the proportion of the conductive auxiliary agent in the negative electrode first active material layer is smaller than that in the negative electrode second active material layer, the reaction area is relatively smaller. Therefore, the cycle durability of the negative electrode first active material and the like and the storage durability of lithium ions in the case where the battery repeats charging and discharging can be improved in the negative electrode first active material layer.

Further, the average particle diameter of the negative electrode second active material 124a of the negative electrode second active material layer 124 is smaller than the average particle diameter of the negative electrode first active material 123a of the negative electrode first active material layer 123. Accordingly, the BET specific surface area of the negative electrode second active material 124a of the negative electrode second active material layer 124 is larger than the BET specific surface area of the negative electrode first active material 123a of the negative electrode first active material layer 123. Therefore, in the negative electrode active material layer 122, the negative electrode second active material layer 124 including the negative electrode second active material 124a having a large reaction area with lithium ions is disposed on the separator 130 side, which is the receiving side of lithium ions when the battery 1 is charged, so that the rapid charging performance of the battery 1 can be further improved.

Further, when the electrolyte further includes an SEI film-forming agent in the battery 1 including the negative electrode 120, the cycle characteristics of the battery 1 can be further improved by suppressing the reaction of the surface of the negative electrode active material and the electrolyte, and the storage durability of the battery 1 can be further improved.

Next, the configuration of the negative electrode for a lithium ion secondary battery according to the second embodiment and the lithium ion secondary battery including the negative electrode will be described in more detail.

### 1. Negative Electrode for Lithium Ion Secondary Battery

The negative electrode for a lithium ion secondary battery according to the second embodiment includes a negative electrode current collector and a negative electrode active material layer laminated on the negative electrode current collector, and the negative electrode active material layer includes a negative electrode first active material layer laminated on the negative electrode current collector and a negative electrode second active material layer laminated on the negative electrode first active material layer.

### (1) Negative Electrode First Active Material Layer

The negative electrode first active material layer includes a negative electrode first active material. The first negative electrode active material contains an Si (silicon-based) material as a negative electrode active material capable of intercalating and deintercalating lithium ions. The Si may be pre-doped with lithium.

Here, the Si-based material in which lithium is pre-doped refers to a negative electrode active material in which lithium is pre-doped in the Si-based material. Examples of the Si-based material pre-doped with lithium include a negative electrode active material obtained by pre-doping Si alone (silicon alone), for example, a Si compound (silicon compound) such as SiO, SiO₂ with lithium.

The negative electrode first active material is not particularly limited as long as it contains the Si-based material as the negative electrode active material, but the negative electrode active material may further contain at least one selected from the group consisting of, for example, a natural graphite, an artificial graphite (a man-made graphite), a hardly graphitizable carbon (a hard carbon), a carbon material such as an easily graphitizable carbon (a soft carbon), and a graphite coated with an amorphous carbon in addition to the Si-based material. This is because the negative electrode can be suppressed from being damaged by including these materials that are more flexible than the Si-based material.

The negative electrode first active material preferably contains a pitch-coated natural graphite and a natural graphite exposed without being coated on the surface, and particularly preferably contains the pitch-coated natural graphite, the natural graphite exposed without being coated on the surface, and the artificial graphite among those further containing at least one selected from the above group.

The negative electrode first active material layer is not particularly limited as long as it contains a negative electrode first active material, but for example, it is preferable that the negative electrode first active material further contains at least one additive selected from the group consisting of a conductive auxiliary agent, a binder and the like in addition to the negative electrode first active material. As the conductive auxiliary agent of the negative electrode first active material layer, the same conductive auxiliary agent as that of the negative electrode first active material layer according to the first embodiment is used. As the binder of the negative electrode first active material layer, the same binder as that of the negative electrode first active material layer according to the first embodiment is used.

The negative electrode first active material layer preferably contains carbon nanotubes as the conductive auxiliary agent, and a binder.

The ratio of the weight of the negative electrode first active material to the total weight of the negative electrode first active material layer is preferably, for example, 80 wt% or more and 99 wt% or less.

Since the thickness of one side of the negative electrode first active material layer (for example, the first thickness T1 in Figure 8) in the laminating direction (for example, the depth direction Y in Figure 8) is the same as that of the negative electrode first active material layer according to the first embodiment, the explanation thereof will be omitted.

### (2) Negative Electrode Second Active Material Layer

The negative electrode second active material layer includes a negative electrode second active material. The negative electrode second active material is not particularly limited as long as it contains a negative electrode active material capable of intercalating and deintercalating lithium ions, but contains at least one selected from the group consisting of carbon materials such as a natural graphite, an artificial graphite (a man-made graphite), a hardly graphitizable carbon (a hard carbon), an easily graphitizable carbon (a soft carbon), and a graphite coated with an amorphous carbon.

The negative electrode second active material contains, for example, at least one selected from the above group, but preferably contains a pitch-coated natural graphite and a natural graphite exposed without being coated on the surface, and particularly preferably contains the pitch-coated natural graphite, the natural graphite exposed without being coated on the surface, and the artificial graphite.

The negative electrode second active material layer is not particularly limited as long as it contains a negative electrode second active material, but for example, it is preferable that the negative electrode second active material further contains at least one additive selected from the group consisting of a conductive auxiliary agent, a binder, and the like in addition to the negative electrode second active material. As the conductive auxiliary agent of the negative electrode second active material layer, for example, the same material as that of the negative electrode first active material layer is used. As the binder of the negative electrode second active material layer, for example, the same binder as that of the negative electrode first active material layer is used.

The ratio of the weight of the negative electrode second active material to the total weight of the negative electrode second active material layer is preferably, for example, 80 wt% or more and 99 wt% or less.

Since the thickness of one side of the negative electrode second active material layer (for example, the second thickness T2 in Figure 8) in the laminating direction (for example, the depth direction Y in Figure 8) is the same as that of the negative electrode second active material layer according to the first embodiment, the explanation thereof will be omitted.

### (3) Negative Electrode Active Material Layer

The negative electrode active material layer satisfies at least one of the following conditions: a first condition in which the density of the negative electrode second active material layer is lower than the density of the negative electrode first active material layer; and a second condition in which the negative electrode first active material layer and the negative electrode second active material layer include a conductive auxiliary agent, and a ratio of the weight of the conductive auxiliary agent to the total weight of the negative electrode second active material layer is larger than the ratio of the weight of the conductive auxiliary agent to the total weight of the negative electrode first active material layer.

The negative electrode active material layer is not particularly limited as long as it satisfies at least one of the first and second conditions, but the negative electrode active material layer satisfying the first condition is preferably one satisfying the condition that the ratio of the void in the negative electrode second active material layer is higher than the ratio of the void in the negative electrode first active material layer. This is because the liquid transfer of the electrolytic solution in the negative electrode second active material layer tends to be better than that in the negative electrode first active material layer.

As the negative electrode active material layer satisfying the above first condition, for example, it is preferable that the density of the negative electrode first active material layer is 1.4 g/cm³ or more and 2.0 g/cm³ or less, and the negative electrode second active material layer is 1.0 g/cm³ or more and 1.6 g/cm³ or less. When the density of the negative electrode first active material layer is larger, the reaction with the electrolytic solution is suppressed. This is because the life performance is improved accordingly. When the density of the negative electrode second active material layer is small, the reaction with the electrolytic solution is accelerated. This is because the charging performance is improved accordingly.

The ratio of the void in the negative electrode first active material layer and the negative electrode second active material layer is not particularly limited, but can be calculated using, for example, "3D-SEM". A 2D photograph group of the negative electrode first active material layer and the negative electrode second active material layer in the laminated cross section of the cell is obtained. Then, the area of the void existing in the 2D photograph group is calculated, and the volume of the void in 3D area is calculated by integrating the area. Then, the ratio of the void can be calculated by calculating the volume of the void with respect to the volume of the entire 3D area.

As the negative electrode active material layer satisfying the second condition, for example, the ratio of the weight of the conductive auxiliary agent to the total weight of the negative electrode first active material layer is preferably 0.5 wt% or more and 10 wt% or less, and the ratio of the weight of the conductive auxiliary agent to the total weight of the negative electrode second active material layer is preferably 1 wt% or more and 15 wt% or less. This is because if the ratio of the weight is larger, the energy density is reduced, and if the ratio of the weight is smaller, the conductivity inside the electrode is deteriorated.

The BET specific surface area of the negative electrode second active material is preferably larger than the BET specific surface area of the negative electrode first active material. The method of determining the BET specific surface area of the negative electrode first active material and the negative electrode second active material, and the preferable ranges of the BET specific surface area of the negative electrode first active material and the BET specific surface area of the negative electrode second active material are the same as those of the first embodiment.

As the negative electrode active material layer, among those in which the BET specific surface area of the negative electrode second active material is larger than the BET specific surface area of the negative electrode first active material, for example, those in which the average particle diameter of the negative electrode second active material is smaller than the average particle diameter of the negative electrode first active material are preferable. This is because the BET specific surface area of the negative electrode second active material can be made larger than the BET specific surface area of the negative electrode first active material only by making the average particle diameter of the negative electrode second active material smaller than the average particle diameter of the negative electrode first active material, so that the rapid charge performance of the battery can be easily improved. The definition of the average particle diameter and the preferable range of the median diameter of the negative electrode first active material and the median diameter of the negative electrode second active material are the same as those of the first embodiment.

### (4) Manufacturing Method

As a method for manufacturing the negative electrode for a lithium ion secondary battery according to the second embodiment, a manufacturing method in which the negative electrode first active material layer and the negative electrode second active material layer of the negative electrode active material layer are simultaneously coated may be used. This manufacturing method is similar to the manufacturing method in which the negative electrode first active material layer and the negative electrode second active material layer of the negative electrode active material layer according to the first embodiment are formed by the simultaneous coating.

### (5) Negative Electrode for Lithium Ion Secondary Battery

The negative electrode for the lithium ion secondary battery according to the second embodiment may be a negative electrode of another example in which the BET specific surface area and the average particle diameter of the active materials of the negative electrode first active material layer and the negative electrode second active material layer are adjusted.

In the negative electrode of such another example, the negative electrode first active material layer includes a negative electrode first active material including the Si-based material such as silicon oxide (SiO), which is pre-doped with lithium, a carbon nanotube, and a binder. The negative electrode second active material layer includes a carbon-based negative electrode second active material. The BET specific surface area of the negative electrode second active material of the negative electrode second active material layer is larger than the BET specific surface area of the negative electrode first active material of the negative electrode first active material layer. The average particle diameter of the negative electrode second active material of the negative electrode second active material layer is smaller than the average particle diameter of the negative electrode first active material of the negative electrode first active material layer.

According to such a configuration, the reaction area of the negative electrode active material per unit volume in the negative electrode active material layer is relatively larger in the negative electrode second active material layer as the high input/output layer than in the negative electrode first active material layer as the high capacity layer. Therefore, in the negative electrode second active material layer that is the high input/output layer, the charging characteristics of the battery, particularly, the rapid charging characteristics can be improved. On the other hand, the expansion and contraction of the negative electrode active material per unit volume due to the charging and discharging of the battery is relatively larger in the negative electrode first active material layer as the high capacity layer than in the negative electrode second active material layer as the high input/output layer. That is, the expansion and contraction of the silicon-based negative electrode first active material is larger than that of the carbon-based negative electrode second active material. However, in the negative electrode first active material layer, the expansion and contraction of the negative electrode first active material or the like can be absorbed by the carbon nanotube and the binder. Therefore, in the negative electrode first active material layer which is the high capacity layer, the cycle durability of the negative electrode first active material and the like and the storage durability of lithium ions when the battery is repeatedly charged and discharged can be improved.

### 2. Lithium Ion Secondary Battery

The lithium ion secondary battery according to the second embodiment is a lithium ion secondary battery including a positive electrode, a negative electrode, and an electrolyte, and the negative electrode is the negative electrode for a lithium ion secondary battery according to the second embodiment.

The lithium ion secondary battery according to the second embodiment is not particularly limited, but includes, for example, a charge/discharge body including a positive electrode, a negative electrode and a separator, and an electrolyte is impregnated in the separator. The lithium ion secondary battery according to the second embodiment may include the electrolyte solution in which the electrolyte is dissolved, and the electrolyte solution may further include an additive such as an SEI film-forming agent, and among them, the electrolyte solution preferably includes the SEI film-forming agent. The SEI film and the SEI film-forming agent are the same as those in the first embodiment.

Further, the lithium ion secondary battery according to the second embodiment may be a battery including a solid electrolyte as the electrolyte, and may include a positive electrode, a negative electrode, and a solid electrolyte layer including a solid electrolyte, and a charge/discharge body in which the solid electrolyte layer is interposed between the positive electrode and the negative electrode. Examples of the battery including the solid electrolyte, and the solid electrolyte are the same as those of the first embodiment.

### 3. Other

The battery including the negative electrode according to another example of the second embodiment may be a separatorless battery including a positive electrode electronic insulation layer provided on the positive electrode and a negative electrode electronic insulation layer provided on the negative electrode, instead of the separator. The configuration, modified examples, and manufacturing method of such a separatorless battery are the same as those of the first embodiment.

The present invention includes the following aspects.

### [Item 1]

The lithium ion secondary battery including:
a positive electrode including a positive electrode current collector, a positive electrode mixture layer provided on the positive electrode current collector, and a positive electrode electronic insulation layer provided on the positive electrode mixture layer; and
a negative electrode including a negative electrode current collector, a negative electrode mixture layer provided on the negative electrode current collector, and a negative electrode including a negative electrode electronic insulation layer provided on the negative electrode mixture layer,
in which an uneven height of an interface between the positive electrode mixture layer and the positive electrode electronic insulation layer is 2 µm or more, and
in which the uneven height of an interface between the negative electrode mixture layer and the negative electrode electronic insulation layer of 2 µm or more.

### [Item 2]

The lithium ion secondary battery according to Item 1, in which the positive electrode electronic insulation layer and the negative electrode electronic insulation layer are in contact with each other.

### [Item 3]

The lithium ion secondary battery according to Item 1 or 2, in which the positive electrode electronic insulation layer and the negative electrode electronic insulation layer are in contact with each other without being fixed.

### Reference Signs List

1 battery (lithium ion secondary battery),
100 charge/discharge body,
110 positive electrode,
111 positive electrode current collector,
111a current collector,
111b positive electrode tab,
111c side edge,
112 positive electrode active material layer,
120 negative electrode (negative electrode for lithium ion secondary batteries),
121 negative electrode current collector,
121a current collector,
121b negative electrode tab,
121c side edge,
122 negative electrode active material layer,
123 negative electrode first active material layer,
124 negative electrode second active material layer,
130 separator,
200 container,
201 case,
202 lid,
300 external terminal,
301 positive electrode terminal,
302 negative electrode terminal,
X lateral width direction of the battery 1,
Y depth direction of the battery 1,
Z height direction of the battery 1.

All publications, patents, and patent applications cited herein are hereby incorporated by reference in their entirety.

## Claims

1. A negative electrode for a lithium ion secondary battery comprising:
a negative electrode current collector; and
a negative electrode active material layer laminated on the negative electrode current collector,
wherein the negative electrode active material layer includes a negative electrode first active material layer laminated on the negative electrode current collector, and a negative electrode second active material layer laminated on the negative electrode first active material layer,
the negative electrode first active material layer includes a negative electrode first active material,
the negative electrode second active material layer includes a negative electrode second active material, and
a BET specific surface area of the negative electrode second active material is larger than the BET specific surface area of the negative electrode first active material.

2. The negative electrode for the lithium ion secondary battery according to claim 1,
wherein an average particle diameter of the negative electrode second active material is smaller than the average particle diameter of the negative electrode first active material.

3. A negative electrode for a lithium ion secondary battery comprising:
a negative electrode current collector; and
a negative electrode active material layer laminated on the negative electrode current collector,
wherein the negative electrode active material layer includes a negative electrode first active material layer laminated on the negative electrode current collector, and a negative electrode second active material layer laminated on the negative electrode first active material layer,
the negative electrode first active material layer includes a negative electrode first active material,
the negative electrode second active material layer includes a negative electrode second active material, and
at least one of the following conditions are satisfied:
a first condition that a density of the negative electrode second active material layer is lower than the density of the negative electrode first active material layer, and
a second condition that the negative electrode first active material layer and the negative electrode second active material layer includes a conductive auxiliary agent, a ratio of a weight of the conductive auxiliary agent to the total weight of the negative electrode second active material layer is larger than the ratio of the weight of the conductive auxiliary agent to the total weight of the negative electrode first active material layer, and
wherein the negative electrode first active material contains an Si-based material.

4. The negative electrode for the lithium ion secondary battery according to claim 3,
wherein the Si-based material contained in the negative electrode first active material is pre-doped with lithium.

5. The negative electrode for the lithium ion secondary battery according to claim 3 or 4,
wherein the negative electrode first active material layer includes a carbon nanotube as the conductive auxiliary agent, and a binder.

6. The negative electrode for the lithium ion secondary battery according to claim 3 or 4,
wherein a BET specific surface area of the negative electrode second active material is larger than the BET specific surface area of the negative electrode first active material.

7. The negative electrode for the lithium ion secondary battery according to claim 6,
wherein an average particle diameter of the negative electrode second active material is smaller than the average particle diameter of the negative electrode first active material.

8. The negative electrode for the lithium ion secondary battery according to any one of claims 1 to 4,
wherein at least one of the negative electrode first active material and the negative electrode second active material include a pitch-coated natural graphite, and a natural graphite exposed without being coated on a surface thereof.

9. A lithium ion secondary battery comprising:
a positive electrode;
a negative electrode; and
an electrolyte,
wherein the negative electrode is the negative electrode for the lithium ion secondary battery according to any one of claims 1 to 4.

10. The lithium ion secondary battery according to claim 9,
further comprising an electrolyte solution in which the electrolytes are dissolved,
wherein the electrolyte solution contains an SEI film-forming agent.
